# EUROPÄISCHE PATENTSCHRIFT

(11) **EP 1 636 503 B1**
(45) Veröffentlichungstag und Bekanntmachung des Hinweises auf die Patenterteilung: **13.09.2006**
(21) Anmeldenummer: 04738668.5
(22) Anmeldetag: 11.06.2004
(51) Int. Cl.: F16C 11/04

(54) **LAGERUNG ZWISCHEN KOMPONENTEN AN BAUMASCHINEN**
BEARING BETWEEN COMPONENTS ON CONSTRUCTION MACHINES
PALIER ENTRE DES COMPOSANTS DE MACHINES DE CONSTRUCTION

(30) Priorität: 24.06.2003 DE 10328187
(43) Veröffentlichungstag der Anmeldung: 22.03.2006
(73) Patentinhaber: CNH Baumaschinen GmbH, 13581 Berlin (DE)
(72) Erfinder: SCHMELING, Ralf, 13581 Berlin (DE); WILLAREDT, Bernhard, 10551 Berlin (DE); OERTEL, Holger, 12487 Berlin (DE); DITZ, Birgit, 14480 Potsdam (DE)
(74) Vertreter: Meinke, Dabringhaus und Partner GbR
(86) Internationale Anmeldenummer: PCT/DE2004/001216
(87) Internationale Veröffentlichungsnummer: WO 2005/008081

(56) Entgegenhaltungen:
- US-A- 4 096 957
- US-A- 5 630 673

## Beschreibung

Die Erfindung betrifft eine Lagerung zwischen Komponenten an Baumaschinen, insbesondere am Auslegerarm an Baggern, Ladern, Kranen etc., wobei zwei oder mehr Komponenten in einem Lagerpunkt gelenkig verbunden sind, nach den Merkmalen im Oberbegriff des Patentanspruchs 1.

Eine derartige Lagerung befindet sich in einer sehr häufig anzutreffenden Ausführungsvariante zwischen den Komponenten Auslegerunterteil und Auslegeroberteil am Auslegerarm von Mobilbaggern, an der als dritte Komponente noch beidseitig je ein Auslegerzylinder angreift. In den Mobilbaggem der Anmelderin selbst ist sie in den Modellen "MH 4.5", "MH 5.5" und "MH 6.5" als eine der mit am weitesten verbreiteten Lösung verwirklicht, wobei letzteres Modell beispielsweise im Prospekt mit dem Druckvermerk "B 459.Oe/2-0301, Printed in Germany" abgebildet ist. Hier ist das Auslegerunterteil mit seinem unteren Ende am Rahmen des Oberwagens in einem Schwenkgelenk befestigt. Das obere Ende des aufwärts zeigenden Auslegerunterteiles ist nach oben gabelförmig geöffnet, in dem der hintere Bereich des Auslegeroberteiles in einem gewissen Abstand vor seinem in Fahrtrichtung des Mobilbaggers gesehenen hinteren Ende in besagter Lagerung aufgenommen ist, wobei beide Komponenten mittels eines Bolzens untereinander verbunden sind.
Zur Ausführung der Schwenkbewegung des Auslegerunterteiles sind vorstehend bereits erwähnte hydraulische Auslegerzylinder einenends auf die äußeren Enden des Bolzens der Lagerung aufgesteckt und anderenends in einem Anlenkpunkt in einem gewissen Abstand vor dem Schwenkgelenk des Auslegerunterteiles gelenkig am Rahmen des Oberwagens befestigt. Beide Verbindungen können entweder über zylindrische Lager oder über Schwenklager hergestellt sein.
Nur der Vollständigkeit halber sei zur Ausbildung des Auslegerarmes in diesem Bereich noch erwähnt, dass zum Heben und Senken des Auslegeroberteiles an dessen hinterem Ende ein hydraulischer Verstellzylinder angreift, dessen unteres Ende an einer Konsole im unteren Bereich des Auslegerunterteiles an einem Schwenkpunkt befestigt ist. Auf das in Fahrtrichtung des Mobilbaggers gesehene vordere Ende des Auslegeroberteiles sowie die nachfolgenden Komponenten muss in dem Zusammenhang hier nicht näher eingegangen werden, weil die räumlich zu weit weg von der Lagerung angeordnet sind und dazu in keinem inhaltlichen Zusammenhang stehen.
Die Lagerung selbst ist von der Mitte ausgehend im Schnitt gesehen so ausgebildet, dass sich die beiden Lagerstellen des Auslegeroberteiles auf dem Mittelstück des Bolzens befinden, in deren vom Bolzen durchdrungene Bohrungen Gleitbuchsen eingepresst sind. Das Auslegerunterteil umgreift das Auslegeroberteil von unten und außen und nimmt im Bereich seiner Oberkante den Bolzen nahe seiner äußeren Enden in zwei Gleitlagern auf, in denen ebenfalls Gleitbuchsen stecken. Die beiden aus den Gleitlagern herausragenden Enden des Bolzens werden von den Lageraugen der Auslegerzylinder, in denen sich die bereits vorstehend genannten zylindrischen Lager oder die Schwenklager befinden, umfasst. Deren axiale Verschiebung auf dem Bolzen wird mit Hilfe von Endscheiben oder mit außen am Bolzen fixierten Ringen verhindert. Eine derartige Lagerung ist in der US 4 096 957 offenbart.
Diese Lösung ist mit einigen Nachteilen behaftet, die darin bestehen, dass durch die Verbindung der drei Komponenten Auslegerunterteil, Auslegeroberteil und Auslegerzylinder über den Bolzens dieser in der konstruktiven Gestaltung dieser Lagerung die Kräfte aller Komponenten allein aufnehmen muss, wodurch er einen entsprechend großen Durchmesser aufweist. Ein großer Durchmesser der Lagerstelle für die Lageraugen der Auslegerzylinder bedeutet aber, dass der Hubweg der Auslegerzylinder und damit die maximale Reichweite des Auslegerarmes des Mobilbaggers eingeschränkt würde. Da das ein zu schwer wiegender Nachteil wäre, werden die äußeren Enden des Bolzens auf einen kleineren Durchmesser abgedreht, womit aber gleich ein neuer Nachteil in Form von höheren Herstellungskosten verbunden ist. Ein weiterer Mangel ist beim Einsatz von zylindrischen Lagern zur beschriebenen Befestigung der Auslegerzylinder oben und unten zu verzeichnen, weil die Demontage der Auslegerzylinder in dieser Ausführung nur dann möglich ist, wenn beide Anschlusspunkte gelöst werden und die Auslegerzylinder zur Vermeidung von Verkantungen gleichmäßig seitlich herausgezogen werden. Analoge Probleme gibt es demzufolge auch bei der Montage. Bei der Verwendung von Schwenklagern anstelle von zylindrischen Lagern verbessert sich zwar dieses Montage-/Demontageproblem, aber dadurch treten zwei neue Nachteile hinzu. Einmal haben die Schwenklager einen größeren Durchmesser als zylindrische Lager und schränken damit wie vorstehend schon erläutert die Reichweite des Auslegerarmes ein und sie verursachen darüber hinaus Mehrkosten. Schließlich besteht noch ein bedeutender Mangel dieser Lagerung darin, dass bei ihrer Demontage mit der Entfernung des Bolzens auch die Komponenten Auslegerunterteil und Auslegeroberteil auseinander fallen.

Deshalb liegt der Erfindung die Aufgabe zugrunde, eine Lagerung zwischen Komponenten an Baumaschinen zu schaffen, die hohe auf die Komponenten einwirkende Kräfte sicher aufnimmt, die einen langen Hubweg der Auslegerzylinder und damit eine maximale Reichweite des Auslegerarmes der Baumaschine zulässt, die eine einfache Montage bzw. Demontage aller Komponenten erlaubt, ohne dass die Komponenten Auslegerunterteil und Auslegeroberteil bei der Demontage voneinander getrennt werden und bei der Montage wieder neu zusammengesetzt werden müßten und die insgesamt kostengünstig herstellbar ist.

Diese Aufgabe wird gemäß der Erfindung durch die Merkmale des Patentanspruchs 1 gelöst, wobei in den Unteransprüchen Merkmale aufgeführt sind, die diese Lösung in vorteilhafter Weise weiter entwickeln.

Durch die Ausbildung der Lagerung für die erste, die zweite und die dritte Komponente als ein sich in Richtung ihrer Schwenkachse erstreckender Bolzen mit gleichem Durchmesser, der in einem Lagerrohr gelagert ist und mit seinen äußeren Enden das Lagerrohr überragt, ist diese Lagerung praktisch in eine gemeinsame Lagerstelle für die erste und die zweite Komponente, in einem bevorzugten Fall für das Auslegerunterteil und das Auslegeroberteil, und in eine Lagerstelle für die dritte Komponente, im gleichen Fall für den Auslegerzylinder, sinnvoll aufgeteilt. Dabei sind die erste und die zweite Komponente nebeneinander auf dem Außendurchmesser des Lagerrohres und die dritte Komponente auf den äußeren Enden des Bolzens gelagert.

Durch den wesentlich größeren Außendurchmesser des Lagerrohres gegenüber dem Außendurchmesser des Bolzens übernimmt das Lagerrohr die Kräfte der ersten und der zweiten Komponente im Wesentlichen allein und es ist aufgrund ihres großen Außendurchmessers auch problemlos in der Lage, sehr große Kräfte aufzunehmen.

Weil der Bolzen von den Kräften der ersten und der zweiten Komponente nahezu nichts tragen muss, kann er schon aus diesem Grund einen relativ kleinen Außendurchmesser haben. Darüber hinaus ist für seine Dimensionierung günstig, dass die von ihm aufzunehmenden Kräfte von der dritten Komponente nur auf seine das Lagerrohr überragenden Enden übertragen werden, so dass die auf den Bolzen einwirkenden Biegemomente niedrig sind und demzufolge der Bolzen auch aus diesem Grund einen kleinen Außendurchmesser haben kann. Das wiederum ist die Voraussetzung für einen langen Hubweg des Auslegerzylinders, wenn der die dritte Komponente bildet.

In einer zweckmäßigen Ausgestaltung der Erfindung mit den Merkmalen des Unteranspruchs 2 befinden sich die Lagerstellen der als Auslegerunterteil ausgebildeten ersten Komponente auf dem mittleren Stück des Lagerrohres und die Lagerstellen des Auslegeroberteiles als zweite Komponente daneben auf dessen äußeren Stücken. Durch das damit verbundene Einstecken des oberen Endes des Auslegerunterteiles in das Auslegeroberteil muss das Auslegerunterteil nicht mehr wie im umgedrehten Fall mit Unterbrechungen bzw. Ausnehmungen versehen werden, so dass es sehr verwindungssteif ist. Da das dann über das Auslegerunterteil gesteckte Profil des Auslegeroberteiles sowieso größer sein muss als das des Auslegerunterteiles und seine Schwächung im Bereich des aufgenommenen Auslegerunterteiles gering ist, weil nur der tatsächliche Bewegungswinkel als Gabelung bei dieser Ausführung freigehalten werden muss, ist diese Konstruktion insgesamt sehr stabil.

In einer weiteren vorteilhaften Ausgestaltung der Erfindung mit den Merkmalen des Unteranspruchs 3 sind die Lagerstellen der ersten und der zweiten Komponente zur Verschleiß- und Geräuschminderung und zum Zwecke der Leichtgängigkeit der Lagerung mit Gleitbuchsen ausgestattet.

Eine bewährte Lösung der Erfindung wird mit den Merkmalen des Unteranspruchs 4 darin gesehen, den Außendurchmesser des Bolzens in seinem mittleren Stück etwas geringer zu halten als in den beiden äußeren Stücken, um die Länge der aufwändig herzustellenden Passungen mit dem Innendurchmesser des Lagerrohres zu minimieren.

Zusammenfassend stellen sich damit die Vorteile der Erfindung so dar, dass diese Lagerung sehr große auf die Komponenten einwirkende Kräfte aufnehmen kann. Durch ihre günstige konstruktive Gestaltung erlaubt sie den Einsatz eines Auslegerzylinder mit einem langen Hubweg als dritte Komponente, so dass die Reichweite des Auslegerarmes sehr hoch ist. Außerdem ermöglicht sie eine einfache Montage bzw. Demontage aller Komponenten, ohne dass die Komponenten Auslegerunterteil und Auslegeroberteil bei der Demontage getrennt und bei der Montage wieder neu zusammengesetzt werden müßten. Außerdem ist sie kostengünstig herstellbar.

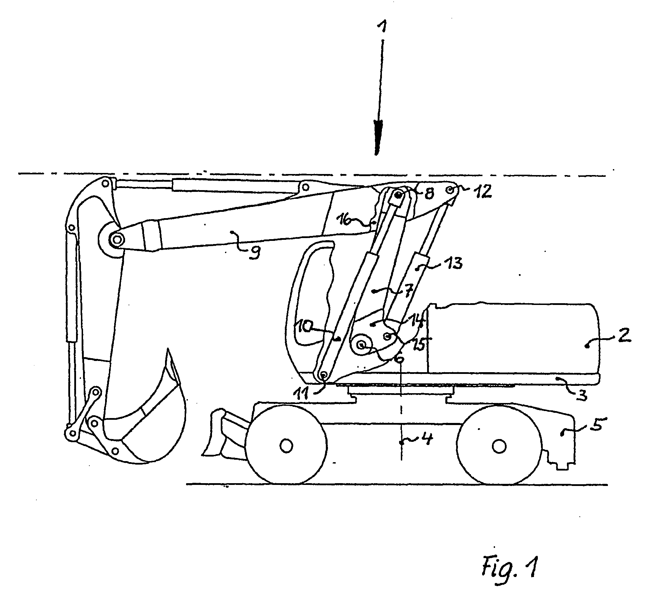

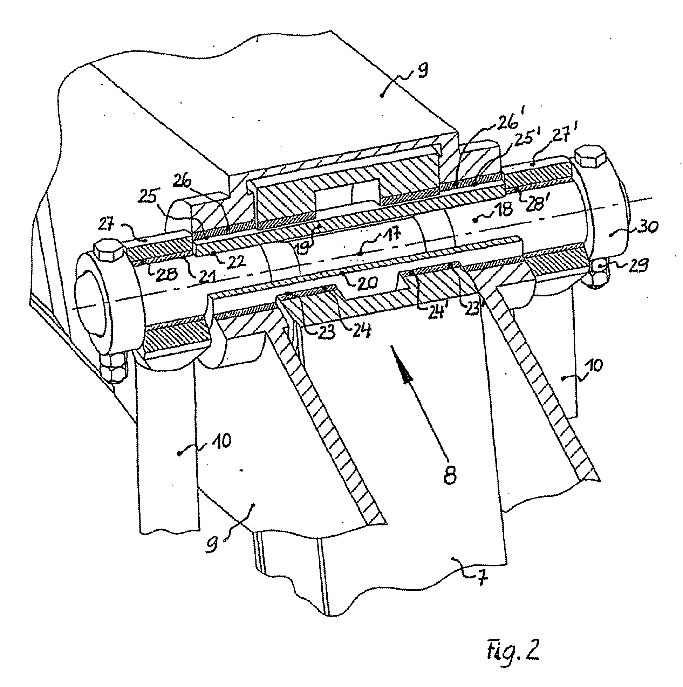

Die Erfindung soll nun anhand eines Ausführungsbeispieles am Auslegerarm eines Mobilbaggers näher erläutert werden, wobei die einzelnen Figuren zeigen:
- Figur 1:: eine Seitenansicht auf die linke Seite des Mobilbaggers mit geteiltem Auslegerarm,
- Figur 2:: eine perspektivische und teilweise geschnittene Ansicht auf die Lagerung zur Verbindung des Auslegerunterteiles mit dem Auslegeroberteil sowie den an der Lagerung angreifenden Auslegerzylindern.
In der Seitenansicht nach Figur 1 ist der konstruktive Aufbau des geteilten Auslegerarmes 1 gezeigt, der auf den Oberwagen 2 des Mobilbaggers aufgebaut und an dessen Rahmen 3 befestigt ist. Der Oberwagen 2 ist um eine vertikal ausgerichtete Achse 4 gegenüber dem Unterwagen 5 in einer horizontalen Ebene verschwenkbar. Er besteht einmal aus einem mit seinem unteren Ende am Rahmen 3 in einem Schwenkgelenk 6 befestigten und als erste Komponente bezeichneten Auslegerunterteil 7. Sein oberes Ende ist über eine Lagerung 8 mit einem sich daran anschließenden und als zweite Komponente bezeichneten Auslegeroberteil 9 verbunden, wobei diese Lagerung 8 innerhalb des Auslegeroberteiles 9 dicht unter dessen Oberkante und in einem gewissen Abstand vor seinem hinteren Ende liegt. Zur Ausführung der Schwenkbewegung des Auslegerunterteiles 7 sind zwei als dritte Komponente bezeichnete hydraulische Auslegerzylinder 10 vorgesehen, die einenends an der Lagerung 8 angreifen und anderenends in einem Anlenkpunkt 11, der sich in einem gewissen Abstand vor dem Schwenkgelenk 6 des Auslegerunterteiles 7 am Rahmen 3 befindet, befestigt sind. Der Vollständigkeit wegen wird zur Ausbildung des geteilten Auslegerarmes 1 in diesem Bereich ergänzt, dass zum Heben und Senken des Auslegeroberteiles 9 an einem in seinem hinteren Ende angeordneten Gelenkbolzen 12 ein hinten liegender und damit beim Tragen ziehender hydraulischer Verstellzylinder 13 angreift, dessen unteres Ende an einer Konsole 14 im unteren Bereich des Auslegerunterteiles 7 an einem Schwenkpunkt 15 befestigt ist.
Eine vergrößerte perspektivische und teilweise geschnittene Ansicht der Lagerung ist in Figur 2 gezeigt. In dieser Darstellung ist das Auslegerunterteil 7 einschließlich seines oberen Endes als verwindungssteifes, geschlossenes Profil ausgebildet und von unten in das Auslegeroberteil 9 eingesteckt. Damit das Auslegeroberteil 9 gegenüber dem Auslegerunterteil 7 im ausreichenden Maße verschwenkt werden kann, weist es wenigstens im Bereich der Lagerung 8 eine sich nach unten öffnende und das Auslegerunterteil 7 aufnehmende Gabelung 16 auf (siehe Fig. 1).
Die Lagerung 8 ist im Detail so ausgebildet, dass sich in Richtung ihrer Schwenkachse 17 ein Bolzen 18 mit annähernd gleichem Durchmesser erstreckt, der die Breite des Auslegeroberteiles 9 mit dem darin steckenden Auslegerunterteil 7 beidseitig ein Stück überragt. Innerhalb der Breite des Auslegeroberteiles 9 ist der Bolzen (18) in einem Lagerrohr 19 gelagert, dessen Außendurchmesser 20 wesentlich größer als der Außendurchmesser 21 des Bolzens 18 ist. Der Bolzen 18 weist im mittleren Stück einen geringfügig kleineren Außendurchmesser 21 gegenüber seinen beiden äußeren Stücken auf, so dass der Bolzen 18 praktisch allein mit seinen äußeren Stücken im Lagerrohr 19 gelagert ist.
Die beiden Lagerstellen 23;23' des Auslegerunterteiles 7 sind in einem gewissen Abstand voneinander auf dem Außendurchmesser 20 des Lagerrohres 19 angeordnet, wobei deren in Bohrungen eingepresste Gleitbuchsen 24;24' auf dem Außendurchmesser 20 gleiten. Die beiden Lagerstellen 25;25' des Auslegeroberteiles 9 befinden sich unmittelbar außen neben den Lagerstellen 23;23' und deren ebenfalls in Bohrungen eingepresste Gleitbuchsen 26;26' gleiten auch auf dem Außendurchmesser 20 des Lagerrohres 19.
Den äußeren Abschluß der Lagerung 8 bilden die Lageraugen 27;27' der beiden Auslegerzylinder 10, die auf die über die Breite des Auslegeroberteiles 9 hinaus ragenden Enden des Bolzens 18 aufgesteckt sind. Auch sie sind mit auf dem Außendurchmesser 21 des Bolzens 18 gleitenden Gleitbuchsen 28;28' ausgerüstet. Zur axialen Fixierung der gesamten Lagerung 8 sind auf dem Bolzen 18 beidseitig mit einer Schraubverbindung 29 gesicherte Ringe 30 angebracht.

### Bezugszeichenaufstellung

- 1: geteilter Auslegerarm
- 2: Oberwagen
- 3: Rahmen
- 4: Achse
- 5: Unterwagen
- 6: Schwenkgelenk
- 7: Auslegerunterteil
- 8: Lagerung
- 9: Auslegeroberteil
- 10: Auslegerzylinder
- 11: Anlenkpunkt
- 12: Gelenkbolzen
- 13: Verstellzylinder
- 14: Konsole
- 15: Schwenkpunkt
- 16: Gabelung
- 17: Schwenkachse
- 18: Bolzen
- 19: Lagerrohr
- 20: Außendurchmesser
- 21: Außendurchmesser
- 22: Innendurchmesser
- 23;23': Lagerstelle
- 24;24': Gleitbuchse
- 25;25': Lagerstelle
- 26;26': Gleitbuchse
- 27;27': Lagerauge
- 28;28': Gleitbuchse
- 29: Schraubverbindung
- 30: Ring

## Patentansprüche

1. Lagerung zwischen Komponenten an einer Baumaschine, insbesondere an einem Auslegerarm an Baggern, Ladern, Kranen etc., bestehend aus einer ersten Komponente, beispielsweise einem Auslegerunterteil (7), die mit einer zweiten Komponente, beispielsweise einem Auslegeroberteil (9), über die Lagerung (8) in gelenkiger Verbindung steht und wo eine dritte Komponente, beispielsweise wenigstens ein Auslegerzylinder (10), an der Lagerung (8) angreift,
**dadurch gekennzeichnet, dass**
a) sich in Richtung der Schwenkachse (17) der Lagerung (8) ein Bolzen (18) gleichen Durchmessers erstreckt, der in einem Lagerrohr (19) gelagert ist, wobei seine äußeren Enden das Lagerrohr (19) überragen,
b) der Außendurchmesser (20) des Lagerrohres (19) wesentlich größer als der Außendurchmesser (21) des Bolzens (18) ist,
c) die erste Komponente und die zweite Komponente auf dem Außendurchmesser (20) des Lagerrohres (19) nebeneinander gelagert sind,
d) auf einem oder beiden der äußeren Enden des Bolzens (18) die dritte Komponente gelagert ist.

2. Lagerung nach Anspruch 1, **dadurch gekennzeichnet, dass** die Lagerstellen (23;23') der ersten Komponente auf dem mittleren Stück des Lagerrohres (19) angeordnet sind und die Lagerstellen (25;25') der zweiten Komponente daneben auf den äußeren Stücken.

3. Lagerung nach den Ansprüchen 1 und 2, **dadurch gekennzeichnet, dass** die Lagerstellen (23;23';25;25') der ersten und der zweiten Komponenten mit Gleitbuchsen (24;24';26;26') ausgestattet sind.

4. Lagerung nach Anspruch 1, **dadurch gekennzeichnet, dass** der Bolzen (18) im mittleren Stück einen geringfügig kleineren Außendurchmesser (21) aufweist als der Innendurchmesser (22) des Lagerrohres (19).

## Claims

1. Bearing assembly between components on a construction machine, in particular on a boom on excavators, loaders, cranes etc., consisting of a first component, for example a lower boom part (7) which is articulated via the bearing assembly (8) to a second component, for example an upper boom part (9) and where a third component, for example at least a boom cylinder (10), engages at the bearing assembly (8),
**characterized in that**
a) extending in the direction of the swivel axis (17) of the bearing assembly (8) is a pin (18) of constant diameter which is housed in a bearing tube (19), wherein its outer ends protrude from the bearing tube (19),
b) the external diameter (20) of the bearing tube (19) is substantially greater than the external diameter (21) of the pin (18),
c) the first component and the second component are housed next to each other on the external diameter (20) of the bearing tube (19),
d) the third component is housed on one or both of the outer ends of the pin (18).

2. Bearing assembly according to claim 1, **characterized in that** the bearing surfaces (23; 23') of the first component are arranged on the middle section of the bearing tube (19), and the bearing surfaces (25; 25') of the second component adjacent to them on the outer sections.

3. Bearing assembly according to claims 1 and 2, **characterized in that** the bearing surfaces (23; 23'; 25; 25') of the first and second components are equipped with sliding bushes (24; 24'; 26; 26').

4. Bearing assembly according to claim 1, **characterized in that** in the middle section the pin (18) has a slightly smaller external diameter (21) than the internal diameter (22) of the bearing tube (19).

## Revendications

1. Palier entre des composants d'une machine de construction, en particulier d'un bras d'excavateur, de chargeur, grue, etc. composé d'un premier composant, par exemple une partie inférieure de bras (7), qui se trouve en relation articulée avec un second composant, par exemple une partie supérieure de bras (9), au-dessus du palier (8), et dans lequel un troisième composant, par exemple au moins un cylindre de bras (10) s'engage contre le palier (8),
**caractérisé en ce que**,
a) dans le sens de l'axe pivotant (17) du palier (8) s'étend un tourillon (18) de même diamètre qui est logé dans un tube de palier (19), ses extrémités externes dépassant du tube de palier (19),
b) le diamètre externe (20) du tube de palier (19) est considérablement supérieur au diamètre externe (21) du tourillon (18),
c) le premier composant et le second composant sont placés l'un à côté de l'autre sur le diamètre externe (20) du tube de palier (19),
d) le troisième composant est logé sur une des extrémités externes, ou les deux, du tourillon (18).

2. Palier selon la revendication 1, **caractérisé en ce que** les points d'appui (23 ;23') du premier composant sont disposés sur la pièce intermédiaire du tube de palier (19), et les points d'appui (25 ; 25') du second composant sont disposés à côté sur les pièces externes.

3. Palier selon les revendications 1 et 2, **caractérisé en ce que** les points d'appui (23 ; 23' ; 25 ; 25') des premier et second composants sont équipés de douilles de guidage (24 ; 24' ; 26 ; 26').

4. Palier selon la revendication 1, **caractérisé en ce que** le tourillon (18) présente dans la pièce intermédiaire un diamètre externe légèrement inférieur (21) au diamètre interne (22) du tube de palier (19).
